(19) Europäisches Patentamt
European Patent Office
Office européen des brevets

(11) EP 0 868 786 B1

(12) **FASCICULE DE BREVET EUROPEEN**

(45) Date de publication et mention de la délivrance du brevet:
**15.03.2000 Bulletin 2000/11**

(21) Numéro de dépôt: **96943162.6**

(22) Date de dépôt: **20.12.1996**

(51) Int Cl.7: **H04B 1/707**

(86) Numéro de dépôt international:
**PCT/FR96/02046**

(87) Numéro de publication internationale:
**WO 97/23961 (03.07.1997 Gazette 1997/29)**

(54) **PROCEDE ET DISPOSITIF D'ELIMINATION DE SIGNAL PARASITE DANS UNE LIAISON A SPECTRE ETALE A SEQUENCE DIRECTE**

VERFAHREN UND GERÄT ZUR NEBENSIGNALUNTERDRÜCKUNG IN EINER DIREKTSEQUENZSPREIZSPEKTRUMVERBINDUNG

METHOD AND DEVICE FOR ELIMINATING SPURIOUS SIGNALS IN A DIRECT-SEQUENCE SPREAD SPECTRUM LINK

(84) Etats contractants désignés:
**BE DE ES FR GB IT NL SE**

(30) Priorité: **22.12.1995 FR 9515391**

(43) Date de publication de la demande:
**07.10.1998 Bulletin 1998/41**

(73) Titulaire: **CENTRE NATIONAL D'ETUDES SPATIALES**
**75001 Paris (FR)**

(72) Inventeur: **LESTHIEVENT, Guy**
**F-31120 Portet-sur-Garonne (FR)**

(74) Mandataire: **Dubois-Chabert, Guy et al**
**BREVATOME**
**3, rue du Docteur Lanceraux**
**75008 Paris (FR)**

(56) Documents cités:
**EP-A- 0 580 243**
**US-A- 5 268 927**
**US-A- 5 363 401**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 868 786 B1

## Description

### Domaine technique

La présente invention concerne un procédé d'élimination de signal parasite dans une liaison à spectre étalé à séquence directe et un dispositif d'élimination de signal parasite permettant de mettre en oeuvre quasi-optimalement le procédé.

L'invention trouve une application particulière dans le système STARSYS. Ce système utilise une constellation de petits satellites sur des orbites basses circulaires pour effectuer des services bidirectionnels de courte messagerie et de localisation entre des terminaux mobiles et une base utilisateur via une ou plusieurs stations sols.

Ces stations sols définissent des zones de services par nécessité d'une visibilité mutuelle entre terminal, satellite et station sol, mais permettent une couverture globale mondiale.

Pour ce, le système utilise des liaisons à spectre étalé dans le sens terminaux mobiles vers les stations sol, mais aussi des canaux bande étroite entre les stations sols et les terminaux. L'utilisation du spectre étalé à séquence directe permet au système de travailler avec une douzaine d'accesseurs (terminaux) simultanés dans la même bande, et ce tout en ayant des puissances d'émission faibles.

La connexion entre les stations sols et les terminaux est plus classique. La localisation s'effectue par traitement simultané d'informations décalage Doppler/Fizeau et mesure de distance.

### Etat de la technique antérieure

Bien que les liaisons en spectre étalé à séquence directe soient par leur principe même relativement robustes contre les signaux parasites bande étroite, leurs performances sont affectées par un nombre important de signaux parasites de forte puissance, comme décrit dans le document référencé [1] en fin de description.

Cette dégradation se traduit par une augmentation du taux d'erreur de bit. On est donc amené à utiliser, dans les liaisons par satellite en spectre étalé à accès multiple (SSMA) des systèmes embarqués adaptatifs de réjection des signaux parasités bande étroite.

Le domaine de l'invention est celui du filtrage adaptatif de signaux parasites dans le domaine fréquentiel ("Frequency Domain Adaptive Filter" ou FDAF) tel que décrit dans les documents de l'art antérieur référencés [2], [3], [5] et [6]. Le filtrage adaptatif de signal parasite dans le domaine fréquentiel se décompose en deux étapes indépendantes, qui peuvent être éventuellement combinées pour simplifier l'implantation matérielle de l'algorithme.

La première étape consiste à faire une détection fréquentielle des signaux parasites par comparaison du spectre du signal composite d'entrée (signaux spectre étalé, bruit et signaux parasites) avec un seuil donné. On élabore ainsi la réponse impulsionnelle d'un filtre RIF (Réponse Impulsionnelle Finie) constituée de filtres réjecteurs à encoches aux fréquences où les signaux parasites ont été identifiés. Le filtrage à réponse impulsionnelle finie ne déforme pas l'information de phase qui véhicule la modulation utile. Cette opération nécessite une transformée de Fourier discrète (TFD) directe pour passer dans le domaine fréquentiel.

La deuxième étape consiste à filtrer le signal composite d'entrée par le filtre RIF synthétisé préalablement. Cette opération se fait par une convolution rapide et nécessite une transformée de Fourier discrète directe et une transformée de Fourier discrète inverse.

Cette technique permet de rejeter tous les signaux parasites bande étroite de puissance supérieure à une puissance donnée. La distorsion du signal utile ne dépend que du rapport de la bande filtrée avec la bande utile du signal étalé. Cette méthode présente l'avantage de n'être sensible qu'à la bande totale occupée par les signaux parasites et non à leur modulation. Le traitement par bloc et l'algorithme de transformation rapide de Fourier ("Fast Fourier Transform" ou FFT) tel que décrit dans le document référencé [4] pour les transformées de Fourier discrètes directe et inverse permettent une implémentation efficace et de complexité relativement réduite de filtres RIF adaptatifs à grand nombre de coefficients.

Cependant, il existe un seuil optimal au-delà duquel le filtrage adaptatif des signaux parasites de faible puissance dégrade davantage la liaison que la non-réjection et l'étalement de l'énergie des signaux parasites par le récepteur spectre étalé. Le signal utile filtré est trop distordu en niveau et en forme d'impulsion pour être convenablement désétalé. Ce seuil optimal peut être mesuré par rapport à la densité spectrale des signaux spectres étalés et du bruit blanc.

L'invention a pour objet de pallier cet inconvénient, afin de permettre une meilleure élimination de signaux parasites dans une liaison à spectre étalé à séquence directe.

### Exposé de l'invention

La présente invention concerne un procédé d'élimination de signal(aux) parasite(s) dans une liaison à spectre

étalé à séquence directe comprenant les étapes suivantes :

- détection fréquentielle de signaux parasites par comparaison du spectre du signal composite d'entrée à un seuil ;
- filtrage du signal composite d'entrée par un filtre à réponse impulsionnelle finie par convolution rapide ;

caractérisé en ce qu'il comprend :

- un asservissement adaptatif du seuil de détection autour d'un seuil de détection optimal (Seuil opt) qui minimise le taux d'erreur de bit (TEB) de la liaison, et qui vérifie la relation |Seuil-Seuil opt| ≤ A, A étant une valeur limite choisie pour que la dégradation de liaison reste acceptable, en utilisant une estimation de la densité spectrale d'entrée, après élimination par filtrage adaptatif des signaux parasites de puissance supérieure à une puissance donnée ;
- un maintien d'une puissance de sortie constante par compensation de l'influence du seuil de détection sur celle-ci.

Avantageusement on a simultanément :

- un minimum de pertes additionnelles en désétalement/démodulation ;
- un maintien d'une puissance de sortie constante par compensation de l'influence du seuil de détection sur celle-ci, la puissance étant, au voisinage de l'optimum, directement proportionnelle au seuil ;
- un spectre de puissance en sortie du dispositif, quasi uniformément réparti en fréquence sur la bande d'analyse, les signaux bande étroite perturbateurs étant ramenés en dessous du niveau moyen de sortie.

L'originalité de l'invention réside donc dans les caractéristiques du procédé de filtrage adaptatif de signaux parasites dans le domaine fréquentiel (FDAF) qui réside dans l'asservissement du seuil de détection une fois les gros signaux parasites supprimés. Cet asservissement, basé sur une estimation de la densité spectrale d'entrée permet de :

- se positionner, en boucle fermée ou en boucle ouverte, au voisinage de l'optimum des performances ;
- contrôler la puissance totale de sortie ainsi que le flux retransmis.

Les signaux parasites peuvent être modulés bande étroite (par rapport à la bande occupée par les signaux utiles en spectre étalé séquence directe) ou non modulés (porteuse pure).

Avantageusement, en boucle fermée, un asservissement discret sert à maintenir le seuil de détection dans une certaine plage autour d'un seuil optimum.

Tant que le seuil est compris dans l'intervalle [SeuilOpt - $\hat{A}$, Seuilopt + $\hat{A}$], la consigne de détection Seuil ne change pas, sinon, Seuil=Seuil -B selon que Seuil est supérieur à SeuilOpt + A, et Seuil=Seuil + B si Seuil est inférieur à SeuilOpt - A.

Dans le procédé de l'invention on a avantageusement les étapes suivantes :

- estimation de la densité spectrale de puissance après application du filtrage telle que :

$$\hat{\hat{S}}^{i}_{tot} = \frac{1}{M} \sum_{k=0}^{M-1} GB^{i}(k).\left|S^{i}_{E}(k)\right|$$

  $GB^i(k)$ étant obtenu à partir du résultat de la comparaison du spectre d'entrée $|S^i_E(k)|$ à la précédente valeur de seuil donc à partir de Gb(k) et de ses plus proches voisins, les Gb(k) étant binaires (donc 0 ou 1), voire multi-valuées entre 0 et 1 ;
- moyennage sur P blocs consécutifs tel que :

$$\hat{\hat{S}}_{tot} = \frac{1}{p} \sum_{i=0}^{p-1} \hat{\hat{S}}^{i}_{tot}$$

- estimation du seuil optimum.

Avantageusement, en boucle ouverte, pour effectuer un filtrage du signal d'entrée par un filtre adaptatif réjecteur et par un filtre passe-bande on effectue une convolution de signaux. On utilise une transformée de Fourier rapide directe et une transformée de Fourier rapide inverse. On peut utiliser la même transformée de Fourier rapide directe pour le filtrage et pour la détection.

Dans le procédé de l'invention on a avantageusement les étapes suivantes :

- chevauchement d'un facteur 1/2 des blocs de taille M :

$$\forall m \in [0, M-1] \qquad s_E^i(m) = s_E\left(i.\frac{M}{2} + m\right)$$

- troncature et passage dans le domaine fréquentiel :

$$S_E^i(k) = TFD\left[s_E^i(m).\ w_M(m)\right] = \frac{1}{M}\sum_{m=0}^{M-1} s_E\left(i.\frac{M}{2} + m\right).\ w_M(m).\ e^{-j2\pi\frac{k}{M}m}$$

- multiplication par le gabarit de filtrage adaptatif et passe-bande :

$$S_S^i(k) = S_E^i(k).\ GB^i(k)$$

- passage dans le domaine temporel :

$$s_S^i(m) = TFDInverse\left[S_S^i(k)\right] = \sum_{k=0}^{M-1}\left(S_E^i(k).\ GB^i(k)\right).\ e^{J2\pi\frac{k}{M}m}$$

$$= \sum_{k=0}^{M-1}\left(\frac{1}{M}\sum_{m=0}^{M-1} s_E\left(i.\frac{M}{2} + m\right).\ w_m(m).\ e^{-j2\pi\frac{k}{M}m}\right).\ GB^i(k).\ e^{j2\pi\frac{k}{M}m}$$

- rejet des deux extrémités de taille M/4 des blocs et reconstitution du signal de sortie :

$$\forall n \in \left[\frac{M}{4}, \infty\right[ \quad i = int\left(\frac{2n}{M} + \frac{1}{2}\right) - 1 \quad s_S(n) = s_S^i\left(n - i\frac{M}{2}\right)$$

$$\left(n - i\frac{M}{2}\right) \in \left[\frac{M}{4}, \frac{3M}{4} - 1\right]$$

Dans le mode boucle ouverte, lorsque le procédé de l'invention est utilisé dans un système de localisation par satellite, la consigne de seuil est chargée par télécommande du sol et sert à piloter un gain variable en sortie du filtrage FDAF. La puissance totale en sortie du filtrage FDAF étant directement proportionnelle au seuil (au voisinage de l'optimum), le filtrage FDAF associé à un gain variable asservi permet d'utiliser au mieux l'amplification non linéaire à bord du satellite et de maîtriser la puissance totale émise en sortie du satellite.

L'invention concerne également un dispositif d'élimination de signal parasite dans une liaison à spectre étalé à séquence directe. Celui-ci comprend avantageusement :

- un premier module de conversion série-parallèle pour des blocs de taille M, dans lequel on réalise un chevauchement des blocs de M/2, et qui reçoit un signal d'entrée complexe $s_E(n)$ ;
- un second module de transformation de Fourier discrète à l'aide d'une transformée de Fourier rapide complexe directe, sur des blocs de taille M, pour passer ainsi dans le domaine fréquentiel, qui reçoit la sortie phase (Phs) et amplitude (Mag) du premier module ;
- un troisième module de transformation de Fourier inverse à l'aide d'une transformée de Fourier rapide inverse, sur des blocs de taille M, recevant les sorties amplitude et phase du précédent module ;
- un quatrième module de conversion parallèle/série, pour des blocs de taille M, avec rejet de M/2 échantillons des extrémités du bloc obtenu, qui délivre le signal de sortie complexe $s_s(n)$ ;
- un module de génération d'une fenêtre de troncature temporelle, par exemple de forme trapézoïdale, envoyé sur une entrée d'un premier multiplieur vectoriel placé entre la sortie amplitude du premier module et l'entrée amplitude du second module ;
- un comparateur du module de chaque échantillon spectral discret $S_E(k)$ pour $0 \leq k \leq M-1$ avec un seuil pour élaborer un gabarit d'emplacement de signaux parasites Gb(k), qui reçoit le signal amplitude en sortie du second module, ainsi qu'un signal de seuil ;
- un filtre RIF passe-bande dont la sortie est envoyée sur un second multiplieur vectoriel qui reçoit également la sortie du comparateur et dont la sortie est envoyée sur un troisième multiplieur vectoriel situé entre la sortie amplitude du second module et l'entrée amplitude du troisième module ;
- un estimateur du seuil optimum tel que :

$$\hat{\hat{S}}^{i}_{tot} = \frac{1}{M} \sum_{k=0}^{M-1} GB^{i}(k).\left|S_E^{i}(k)\right|$$

- un module de moyennage sur P blocs consécutifs tel que :

$$\hat{\hat{S}}_{tot} = \frac{1}{p} \sum_{p=0}^{p-1} \hat{\hat{S}}^{p}_{tot}$$

- un estimateur du seuil optimum.
- un module de sélection de mode qui permet de fonctionner :
  - soit en boucle fermée (mode 0) avec un autre module de modification de la consigne Seuil tel que : si

$$|Seuil-\hat{S}euil\ Opt| > A$$

alors :

$$\begin{cases} Seuil = Seuil - B & si\ \left(Seuil - \hat{S}euilOpt\right) > 0 \\ Seuil = Seuil + B & si\ \left(Seuil - \hat{S}euilOpt\right) < 0 \end{cases}$$

  - soit en boucle ouverte (mode 1).

Ce module de sélection de mode comprend un premier et un second commutateurs, le premier commutateur délivrant le signal seuil au comparateur et le second étant relié à un multiplieur scalaire disposé entre la sortie du multiplieur et l'entrée amplitude du troisième module.

Brève description des dessins

- La figure 1 illustre la composition du signal temporel complexe d'entrée ;
- la figure 2 illustre un gabarit d'emplacement de signaux parasites ;
- la figure 3 illustre un filtrage passe-bande ;
- la figure 4 illustre un gabarit de filtrage adaptatif et de filtrage passe-bande ;
- la figure 5 illustre la réjection obtenue par le filtre passe-bande ;
- la figure 6 illustre une fenêtre de troncature temporelle utilisée ;
- la figure 7 illustre la transformée de Fourier de fenêtres rectangulaires et trapézoïdales ;
- la figure 8 illustre le fonctionnement en boucle fermée du procédé de l'invention ;
- la figure 9 illustre un filtrage par convolution ;
- la figure 10 illustre la technique de chevauchement et de rejet ;
- la figure 11 illustre le dispositif de l'invention.

Exposé détaillé de modes de réalisation

Dans la suite on considérera, à titre d'exemple, une description du procédé et du dispositif de l'invention mis en oeuvre dans le système STARSYS.

Le procédé de filtrage adaptatif de signaux parasites dans le domaine fréquentiel (FDAF), tel que décrit dans les documents référencés [2] et [3] consiste à effectuer les deux opérations consécutives suivantes :

- détection fréquentielle des signaux parasites et élaboration d'un filtre RIF adaptatif ;
- le filtrage à réponse impulsionnelle finie (RIF) du signal composite (signaux en spectre étalé, bruit plus signaux parasites) par une technique de convolution rapide, comme décrit dans le document référencé [5].

On va détailler par la suite ces deux étapes.

On utilisera les notations suivantes :

Les signaux du domaine temporel sont écrits en minuscules, les majuscules désignent les signaux dans le plan fréquentiel. L'indice n est utilisé dans le plan temporel et signifie n=n.Te. L'indice k est utilisé dans le plan fréquentiel discrétisé sur M échantillons et signifie k=k/M.Fe. On travaille sur des signaux complexes.

On dispose en entrée du dispositif de mise en oeuvre du procédé de l'invention d'un signal temporel complexe $s_E(n) = s_E(n.Te)$, correctement échantillonné à la fréquence Fe=1/Te.

Ce signal, comme illustré sur la figure 1, est constitué des signaux suivants :

$s_u(n)$ Signal utile en spectre étalé sur une bande B = $\alpha$.Fe avec $0 < \alpha < 1$.

$$\sum_{q=1}^{Q} ssma_q(n)$$

Q utilisateurs en spectres étalés (multi-accesseurs) sur une bande B.

$n_b(n)$ Bruit blanc gaussien.

$$\sum_{i=1}^{I} j_i(n)$$

I signaux parasites bande étroite dans la bande B.

En séparant les signaux bande étroite et large bande :

$$s_E(n) = s_{tot}(n) - \sum_{i=1}^{I} j_i(n)$$

signal temporel en entrée du dispositif de l'invention (FDAF) avec :

$$s_{tot}(n) = \left( s_u(n) - \sum_{q=1}^{Q} ssma_q(n) \div n_b(n) \right)$$

signaux large bande (bruit blanc et signaux étalés).

Soit $s_s(n)$ le signal temporel discret en sortie du dispositif FDAF.

Pour effectuer la détection fréquentielle des signaux parasites dans le signal complexe composite discret d'entrée $s_E(n)$, on effectue tout d'abord une Transformée de Fourier Discrète (TDF) directe à l'aide d'une transformée de Fourier rapide (FFT) comme décrit dans le document référencé [4] sur un bloc de taille M pour passer dans le domaine fréquentiel.

$$\forall k \in [0, M-1],$$

$$S_E(k) = TFD[s_E(n).w(n)] = \frac{1}{M} \sum_{n=0}^{M-1} [s_E(n).w(n)].e^{-j2\pi.\frac{k}{M}.n}$$

<u>avec</u>
- $w(n)$ fenêtre de troncature temporelle
- $S_u(k) = TFD[s_u(n).w(n)]$ Spectre complexe du signal utile étalé.
- $SSMAp(k) = TFD[ssmap(n).w(n)]$ Spectre complexe d'un utilisateur spectre étalé.
- $N_b(k) = TFD[n_b(n).w(n)$ Spectre complexe du bruit blanc.
- $J_i(k) = TFD[j_i(n).w(n)]$ Spectre complexe d'un signal parasite bande étroite.

En séparant les signaux bande étroite et large bande :

$$\forall k \in [0, M-1], \qquad S_E(k) = S_{tot}(k) + \sum_{i=1}^{I} j_i(k)$$

avec :

$$S_{tot}(k) = \left( S_u(k) + \sum_{q=1}^{Q} SSMA_q(k) + N_b(k) \right)$$

spectre complexe des signaux large bande.

On compare alors le module de chaque échantillon spectral discret $|S_E(k)|$ $0 \le k < M-1$, avec un seuil constant (Seuil) sur [0, Fe], On élabore ainsi un gabarit d'emplacement de signaux parasites Gb(k) qui est égal à zéro si le module du spectre est au-dessus du seuil, un sinon, comme illustré sur la figure 2.

$$\forall l \in [0, M-1] \quad Gb(l) = \begin{cases} 0 \text{ si } |S_E(l)| \geq \text{Seuil} \\ 1 \text{ si } |S_E(l)| < \text{Seuil} \end{cases}$$

Le choix de M est un compromis entre la finesse d'analyse fréquentielle (résolution élémentaire Fe/M) et la durée temporelle de cette analyse (M/Fe) pour obtenir une quasi-stationnarité des signaux parasites bande étroite (d'occupation spectrale minimale). L'optimum obtenu après test est de M=1024 pour une bande B=900 kHz à 1 MHz et la fréquence d'échan-tillonnage Fe allant de 1,2 MHz à 1,5 MHz.

On élabore ainsi la réponse impulsionnelle d'un filtre RIF constituée de rejecteurs (ou filtres à encoches (Notch) aux fréquences discrètes où les signaux parasites ont été identifiés.

Le Seuil de détection doit être au-dessus du spectre composé des signaux spectre étalé et du bruit : $\forall k \in [0,M-1]$ Seuil > $S_{tot}(k)$. En effet, sinon, on détecte un très grand nombre d'échantillons spectraux supérieurs au seuil. La bande filtrée étant alors relativement importante par rapport à la bande utile 3, les dégradations en puissance et sur la forme de l'impulsion du signal utile ne permettent plus un désétalement correct du signal utile.

Au lieu d'utiliser un seuil constant sur la bande de fréquence, on peut envisager d'utiliser un seuil qui aurait une forme spectrale similaire au spectre de la modulation du signal utile pour pondérer le filtrage en fonction de l'information et ainsi moins détériorer le signal utile large bande.

La bande occupée par les signaux spectre étalé est B = $\alpha$.Fe avec $0<\alpha<1$, soit $\alpha$.M échantillons spectraux (avec $\alpha$.M entier pair). On ne conserve donc que les $\alpha$.M échantillons centraux de Gb(k).

Le filtre passe-bande le plus simple consiste à appliquer une fenêtre rectangulaire $\Pi_{\alpha Fe}(f)$ dans le domaine fréquentiel, centrée en f = 0 et de largeur $\alpha$.Fe, comme illustré sur la figure 3. Dans ce cas le nouveau gabarit s'écrit :

$$\forall l \in [0, M-1] \quad GB(l) = \begin{cases} Gb(l) \quad \frac{M(1-\alpha)}{2} \leq l \leq \frac{M(1+\alpha)}{2} \\ 0 \quad \text{ailleurs} \end{cases}$$

Pour limiter les oscillations dans le domaine temporel dues à la troncature brutale du gabarit fréquentiel (phénomène de Gibbs), on applique une fenêtre de troncature fréquentielle H(f) plus douce que la fenêtre rectangulaire. On calcule la consigne spectrale H(f) à partir d'un filtre RIF de longueur M échantillons, puis on la tabule. Il ne reste plus qu'à effectuer le produit de Gb(k) par H(k) pour obtenir le gabarit GB(k) de filtrage adaptatif et de filtrage passe-bande, comme illustré sur la figure 4.

On effectue la convolution dans le domaine fréquentiel de la fenêtre rectangulaire $\Pi_{\alpha Fe}(f)$ par la transformée de Fourier d'une gaussienne Gauss(x), de paramètre $\gamma = 3$. Ce filtre passe-bande permet d'obtenir une réjection de -60dB à 0.078Fe de la fréquence de coupure à $\alpha$Fe/2 (ou $\alpha$.M/2 en échantillons), comme illustré sur la figure 5.

$$H(f) = \prod_{\alpha Fe}(f) * TFD[Gauss(x)] = TFD\{TFI[\prod_{\alpha Fe}(f)].Gauss(x)\}$$

$$\prod\nolimits_{\alpha Fe}(f) = \begin{cases} 1 \text{ pour } -\frac{\alpha.Fe}{2} \le t < \frac{\alpha.Fe}{2} \\ 0 \text{ ailleurs} \end{cases}$$

$$Gauss(x) = \begin{cases} \exp\left(-\frac{1}{2}(\gamma.x)^2\right) & -1 \le x < 1 \\ 0 \text{ ailleurs} \end{cases}$$

Pour améliorer la détection, il est souhaitable d'utiliser une fenêtre de troncature temporelle w(t) de taille T = MTe. En effet, l'utilisation d'une fenêtre naturelle rectangulaire $\Pi_T(f)$ assure la meilleure résolution fréquentielle mais les lobes secondaires élevés du spectre $\Pi(f)$ sont susceptibles de déclencher de fausses détections sur des échantillons spectraux voisins du pic principal si le seuil de détection est trop bas.

D'autre part, le filtrage par convolution nécessite une transformée de Fourier discrète directe et une transformée de Fourier discrète inverse. Pour simplifier l'implantation matérielle de l'algorithme et réduire de manière importante le coût calculatoire, on utilise la même transformée de Fourier discrète directe pour la détection et pour la convolution. La fenêtre de troncature w(t) doit donc représenter un compromis entre l'amélioration de la détection et la dégradation du filtrage. La fenêtre retenue est une fenêtre trapézoïdale dont les temps de montée et de descente relatifs ($\Delta T/T$) sont de 1/4, comme illustré sur la figure 6.

$$\Pi_T(t) = \begin{cases} 1 \text{ pour } -\frac{T}{2} \le t < \frac{T}{2} \\ 0 \text{ ailleurs} \end{cases} \xleftrightarrow{TF} \prod(f) = \frac{\sin(\pi f T)}{(\pi f T)}$$

$$w_T(t) =$$

$$\begin{cases} -|t| \text{ pour } \frac{T-\Delta T}{2} \le |t| < \frac{T}{2} \\ 1 \text{ pour } 0 \le |t| < \frac{T-\Delta T}{2} \xleftrightarrow{TF} W(f) \\ \qquad = \left(1-\frac{\Delta T}{T}\right) \cdot \frac{\sin\left(\pi f T \frac{\Delta T}{T}\right)}{\left(\pi f T \frac{\Delta T}{T}\right)} \cdot \frac{\sin\left(\pi f T\left(1-\frac{\Delta T}{T}\right)\right)}{\left(\pi f T\left(1-\frac{\Delta T}{T}\right)\right)} \\ 0 \text{ ailleurs} \end{cases}$$

La figure 7 illustre la transformée de Fourier de fenêtres rectangulaires et trapézoïdales.

Pour un seuil faible, on détecte avec la fenêtre trapézoïdale plus de bins (pas élémentaires de fréquence en transformée de Fourier rapide (FFT)) consécutifs autour de la fréquence centrale du signal parasite qu'avec la fenêtre rectangulaire. La bande filtrée pour un signal parasite identique est plus importante avec la fenêtre trapézoïdale, mais le risque de détecter des bins sur les lobes secondaires est plus faible.

On dégrade d'autant plus le signal qu'on abaisse le seuil de détection. En effet, plus il est faible, plus la bande

amputée par le filtrage est importante, plus on détériore en niveau et en forme d'impulsion le signal utile. On diminue donc la puissance des signaux parasites mais parallèlement on détériore en niveau et en forme d'impulsion le signal utile.

La diminution de la puissance des signaux parasites et la dégradation du signal utile évoluant en sens inverse, il existe un seuil de détection optimal qui minimise le taux d'erreur de bit (TEB) de la liaison, donc le rapport énergie bit sur densité spectrale de puissance de bruit (divers) équivalent. Au voisinage de l'optimum les performances sont faiblement dégradées. Soit A la limite de tolérance. Donc pour |Seuil-Seuil Opt| ≤ A les performances restent acceptables.

La limite inférieure de seuil est représentée par la valeur moyenne de $S_{tot}$(k.Fe) sur les aM échantillons spectraux centraux représentant la bande utile B.

$$\bar{S}_{tot} = \frac{1}{\alpha M} \sum_{k=-\alpha M/2}^{\alpha M/2-1} S_{tot}(k) .$$

En effet au-delà de $\bar{S}_{tot}$, on peut considérer que l'on détecte tous les bins (pas élémentaires de fréquence en FFT) et on élimine tout le signal $s_E(n)$ présent dans la bande (signal utile, multi-accesseurs, bruit et signaux parasites).

On repère donc le seuil optimal par rapport au spectre moyen d'entrée moins la contribution des signaux parasites bande étroite, soit $\bar{S}_{tot}$.

$$\bar{S}_{tot} = \overline{\left( S_u(k) + \sum_{q=1}^{Q} SSMA_q(k) + N_b(k) \right)}$$

spectre moyen total des signaux complexes large bande. ΔOpt = écart entre le seuil optimum et le spectre moyen total $\bar{S}_{tot}$ ;

donc SeuilOpt = $\bar{S}_{tot}$+ΔOpt est le seuil optimisant la liaison en TEB (taux d'erreur de bit).

L'asservissement du seuil peut fonctionner de deux manières différentes :

- en boucle fermée ;
- en boucle ouverte.

Dans le mode de fonctionnement en boucle fermée, illustré sur la figure 8, l'asservissement discret sert à maintenir le seuil de détection dans une certaine plage autour du seuil optimum.

A l'aide d'un estimateur $\hat{\bar{S}}_{tot}$ et connaissant l'écart ΔOpt, on calcule le seuil optimum estimé :

$$\widehat{SeuilOpt} = \hat{\bar{S}}_{tot} + \Delta Opt.$$

Tant que le seuil est compris dans l'intervalle [$\widehat{SeuilOpt}$ - A, $\widehat{SeuilOpt}$ + A], la consigne de détection Seuil ne change pas. Sinon, Seuil=Seuil ±B selon que Seuil est supérieur à SeuilOpt + A ou inférieur à SeuilOpt - A (figure 8). Cet asservissement permet de compenser des variations lentes de $\hat{\bar{S}}_{tot}$. A est choisie de sorte que sur l'intervalle [SeuilOpt - A, SeuilOpt + A] la dégradation de la liaison reste acceptable.

Le seuil optimum estimé SeuilOpt et le seuil de détection effectif, Seuil, constituent deux télémesures importantes et représentatives du fonctionnement du procédé de l'invention.

A partir du gabarit GB(k) défini sur [0,2N] et du signal $S_E(k)$, on construit un estimateur $\hat{\bar{S}}_{tot}$ de $\bar{S}^i_{tot}$ spectre moyen total des signaux en spectre étalé et du bruit pour le ième bloc de taille M.

Le produit du gabarit de filtrage G3(k) avec le module du spectre discret du signal d'entrée $|S_E(k)|$ réalise une opération de filtrage dans le domaine fréquentiel qui élimine les signaux parasites bande étroite. Idéalement, il ne reste que la contribution due aux signaux en spectre étalé et du bruit $S_{tot}(k)$.

L'estimateur de la densité spectrale des signaux large bande est tel que :

$$\forall k \in [0, M-1]\ \hat{S}_{tot}(k) = GB(k).|S_E(k)|.$$

On effectue alors la moyenne sur les M échantillons spectraux de la transformée de Fourier rapide.

L'estimateur de la densité spectrale moyenne des signaux large bande est tel que :

$$\hat{\bar{S}}^{i}_{tot} = \frac{1}{M}\sum_{k=0}^{M-1} GB^{i}(k).\left|S^{i}_{E}(k)\right| .$$

On effectue ensuite la moyenne sur P blocs consécutifs de $\hat{\bar{S}}^{i}_{tot}$, ce qui est équivalent à un filtrage premier ordre avec une constante de temps T0:T0=P.(M.Te) secondes dans le cas de transformée de Fourier rapide sans chevauchement des blocs, T0=(P+1)/2.(M.Te) si on fait des transformées de Fourier rapides avec chevauchement d'un demi bloc.

L'estimateur du seuil optimum est tel que :

$$\hat{\bar{S}}_{tot} = \frac{1}{P}\sum_{p=0}^{P-1} \overline{S}^{p}_{tot}$$

Connaissant l'écart ΔOpt, on en déduit une estimation du seuil optimum :

$$\hat{S}euilOpt = \hat{\bar{S}}_{tot} + \Delta Opt$$

On a la modification suivante de la consigne Seuil

Si

$$|Seuil - \hat{S}euilOpt| > A$$

alors :

$$\begin{cases} Seuil = Seuil - B & si\ \left(Seuil - \hat{S}euilOpt\right) > 0 \\ Seuil = Seuil + B & si\ \left(Seuil - \hat{S}euilOpt\right) < 0 \end{cases}$$

Dans le mode de fonctionnement en boucle ouverte le seuil de détection Seuil est directement téléchargé du sol. Il n'est plus modifié à bord même s'il sort de l'intervalle [SeuilOpt - A, SeuilOpt + A]. L'exploitation de la télémesure du seuil optimal estimé SeuilOpt peut servir à modifier la consigne à partir du sol.

La puissance totale en sortie du dispositif de l'invention (FDAF) est directement proportionnelle au seuil de détection au voisinage du seuil optimum. Plus le seuil est bas, plus la puissance totale en sortie du dispositif est faible.

Ce mode de fonctionnement du dispositif, combiné à un gain numérique variable asservi au seuil, en sortie du dispositif permet d'optimiser l'amplification non linéaire à bord du satellite en imposant un recul fixe en entrée de celle-ci par exemple.

L'asservissement du gain variable au seuil est tel que :

| | |
|---|---|
| Pout_fdaf=K.Seuil | puissance totale en sortie du dispositif |
| Pout_gain | puissance totale en sortie du gain variable |
| Pout | puissance totale en sortie de l'amplificateur non-linéaire |
| G. | gain variable |

Gsat gain fixe du satellite jusqu'en sortie de l'amplificateur non linéaire

En sortie du gain variable :

$$Pout_gain = G.Pout_fdaf$$

$$= G.K.Seuil$$

En sortie de l'amplificateur non linéaire :

$$Pout = Gsat.Pout_gain$$

$$= Gsat.G.K.Seuil$$

d'où

$$G=G(Pout, Seuil) = \frac{Pout}{Gsat.\ K.\ Seuil}$$

Avec cet asservissement de gain variable au Seuil, pour obtenir une puissance donnée en sortie du satellite (respect des normes de radiocommunication par exemple), on sait quel seuil télécharger.

De plus, l'application d'un seuil constant sur la bande utile a pour effet de lisser la densité spectrale de puissance par élimination des pics correspondant aux signaux parasites. Le résultat en sortie est un signal total $s_s(n)$ gaussien complexe et correspond à un blanchiement du spectre dans la bande utile. Ce blanchiement permet de limiter partout au maximum la présence des signaux parasites, même vu dans une bande étroite, à la réémission, et ce sans trop dégrader les performances de la station de réception (optimales avec un bruit additif blanc gaussien en entrée et décorrélé avec les signaux utiles).

L'opération de filtrage du signal d'entrée $s_E(n.Te)$ par le filtre adaptatif réjecteur et le filtre passe-bande consiste à faire la convolution de $s_E(n.Te)$ par gb(n.Te)= TFDInverse [GB(k.Fe].

Soit dans le domaine fréquentiel le produit de $S_E(k, Fe)$ = TFD [$s_E(n,Te)$] par GB(k.Fe), comme illustré sur la figure 9.

$$s_s(n.Te) = s_E(n.Te)*TFDInverse[GB(k.Fe)]$$

$$= TFDInverse[TFD[s_E(n.Te)].GB(k.Fe)]$$

Cette opération nécessite une transformée de Fourier rapide directe et une transformée de Fourier rapide inverse. On utilise la même transformée de Fourier rapide directe pour le filtrage et pour la détection dans un souci d'économie de calculs. On utilise donc la même fenêtre de troncature temporelle pour la détection et le filtrage.

Le filtrage par convolution rapide ne fonctionne correctement que si l'on ne conserve que les N=M/2 échantillons centraux de la transformée de Fourier rapide inverse, comme dans la référence [5]. Par conséquent, en entrée du dispositif FDAF on chevauche les blocs de taille M de N=M/2 échantillons cependant qu'en sortie du dispositif FDAF on rejette les 2.M/4 échantillons des extrémités du bloc obtenu comme illustré sur la figure 10.

On a ainsi les opérations suivantes :

- chevauchement d'un facteur 1/2 des blocs de taille M :

$$\forall m \in [0, M-1] \qquad s_E^i(m) = s_E\left(i.\frac{M}{2} + m\right)$$

- troncature et passage dans le domaine fréquentiel :

$$s_E^i(k) = TFD\left[s_E^i(m).\ w_M(m)\right] = \frac{1}{M}\sum_{m=0}^{M-1} s_E\left(i.\frac{M}{2}+m\right).\ w_M(m).\ e^{-j2\pi\frac{k}{M}m}$$

- multiplication par le gabarit de filtrage adaptatif et passe-bande :

$$S_S^i(k) = S_E^i(k).\ GB^i(k)$$

- passage dans le domaine temporel :

$$s_S^i(m) = TFDInverse\left[s_S^i(k)\right] = \sum_{k=0}^{M-1}\left(s_E^i(k).\ GB^i(k)\right).\ e^{j2\pi\frac{k}{M}m}$$

$$= \sum_{k=0}^{M-1}\left(\frac{1}{M}\sum_{m=0}^{M-1} s_E\left(i.\frac{M}{2}+m\right).\ w_m(m).\ e^{-j2\pi\frac{k}{M}m}\right).\ GB^i(k).\ e^{j2\pi\frac{k}{M}m}$$

- rejet des deux extrémités de taille M/4 des blocs et reconstitution du signal de sortie :

$$\forall n \in \left[\frac{M}{4},\infty\right[ \quad i = int\left(\frac{2n}{M}+\frac{1}{2}\right)-1 \qquad s_S(n) = s_S^i\left(n-i\frac{M}{2}\right)$$

$$\left(n-i\frac{M}{2}\right) \in \left[\frac{M}{4},\frac{3M}{4}-1\right]$$

La figure 11 illustre un dispositif de mise en oeuvre quasi-optimale du procédé de l'invention. Ce dispositif comprend :

- un premier module 10 de conversion série-parallèle pour des blocs de taille M, dans lequel on réalise un chevauchement des blocs de M/2, et qui reçoit le signal d'entrée complexe $s_E(n)$ ;
- un second module 11 de transformation de Fourier discrète à l'aide d'une transformée de Fourier rapide complexe directe, sur des blocs de taille M, pour passer ainsi dans le domaine fréquentiel, qui reçoit la sortie phase (Phs) et amplitude (Mag) du premier module 10 ;
- un troisième module 12 de transformation de Fourier inverse à l'aide d'une transformée de Fourier rapide inverse, sur des blocs de taille M, recevant les sorties amplitude et phase du précédent module 11 ;
- un quatrième module 13 de conversion parallèle/série, pour des blocs de taille M, avec rejet de M/2 échantillons des extrémités du bloc obtenu, qui délivre le signal de sortie complexe $s_s(n)$ ;
- un cinquième module 14 de génération d'une fenêtre de troncature temporelle, ici de forme trapézoïdale, envoyé sur une entrée d'un premier multiplieur vectoriel 15 placé entre la sortie amplitude du premier module 10 et l'entrée amplitude du second module 11 ;
- un comparateur 16 du module de chaque échantillon spectral discret $S_E(k)$ pour $0 \leq k \leq M-1$ avec un seuil pour élaborer un gabarit d'emplacement de signaux parasites Gb(k), et qui reçoit le signal amplitude du second module 11, ainsi qu'un signal de seuil ;
- un filtre RIF passe-bande 17 dont la sortie est envoyée sur un second multiplieur vectoriel 18, qui reçoit également la sortie du comparateur 16, et dont la sortie est envoyée sur un troisième multiplieur vectoriel 19 situé entre la sortie amplitude du second module 11 et l'entrée amplitude du troisième module 12 ;
- un estimateur 20 du seuil optimum tel que :

$$\hat{\hat{S}}^{i}_{tot} = \frac{1}{M} \sum_{k=0}^{M-1} GB^{i}(k).\left|S^{i}_{E}(k)\right| \;;$$

- un module 21 de moyennage sur P blocs consécutifs tel que :

$$\hat{\hat{S}}_{tot} = \frac{1}{P} \sum_{p=0}^{P-1} \hat{\hat{S}}^{p}_{tot} \;;$$

- un estimateur 22 du seuil optimum tel que

$$\hat{S}euilOpt = \hat{\hat{S}}_{tot} + \Delta Opt \;;$$

- un module 23 de modification de la consigne seuil tel que :
  Si

$$|Seuil - \hat{S}euilOpt| > A$$

alors :

$$\begin{cases} Seuil = Seuil - B & si\ (Seuil - \hat{S}euilOpt) > 0 \\ Seuil = Seuil + B & si\ (Seuil - \hat{S}euilOpt) < 0 \end{cases}$$

$z^{-1}$ représentant, sur la figure, l'échantillon précédent ;

- un premier et un second commutateurs 24 et 25 permettant de fonctionner en mode boucle fermée (mode 0) ou en mode boucle ouverte (mode 1), le premier commutateur délivrant le signal seuil au comparateur 16 et le second étant relié à un multiplieur scalaire 26 disposé entre la sortie du multiplieur 19 et l'entrée amplitude du troisième module 12, $K_1$ étant un coefficient et V une valeur déterminée permettant, par exemple, d'obtenir le gain G variable assurant une puissance de sortie constante ($V = K_1 \times Seuil$).

La réjection adaptative se fait dans le domaine fréquentiel (FDAF). Elle utilise les différences de propriété spectrale entre les signaux parasites (bande étroite) et les signaux utiles (large bande >> bande étroite).

Elle repose sur l'enchaînement de deux opérations, la détection fréquentielle et le filtrage réjecteur (RIF) des signaux parasites.

Dans le cas du système STARSYS l'originalité de l'invention réside dans l'optimisation de tous les réglages aux caractéristiques de la bande retour montante ainsi que dans les deux stratégies proposées, seuil constant et asservissement autour du seuil optimum (pour TEB en réception) tout en permettant un contrôle de la puissance émise bord, ainsi qu'un "blanchiement" de la densité spectrale de puissance du signal réémis.

Moyennant des adaptations de paramètres, ce procédé peut, bien évidemment, être appliquée à d'autres bandes de fréquence dans lesquelles on retrouve la même différence spectrale entre signaux parasites et signal(aux) utile(s).

REFERENCES

[1] "A Tutorial Theory of Spread Spectrum Communications" (IEEE Trans. ON Comm, vol COM 30, n° 5, mai 1982)

[2] "Suppression of Narrow Jammers in a Spread Spectrum Receiver Using Transform Domain Adaptive Filtering"

de Gary J. Saulnier (IEEE Journal on Selected Areas in Communication, vol. 10, n° 4, mai 1992)

[3] "Efficient Realization of Adaptive Digital Filters in the Time and Frequency Domains" de G.A. Clark, S.R. Parker, S.K. Mitra (IEEE 1982)

[4] "A Plain Man's Guide to the FFT" de P. Kraniauskas (IEEE SP Magazine, avril 1994)

[5] "Multirate Digital Signal Processing" de Ronald E. Crochiere (Prentice-Hall Signal Processing Series, Alan V. Oppenheim, Series Editor)

[6] "Frequency-Domain and Multirate Adaptive Filtering" de John J. Shynk (IEEE SP Magazine, janvier 1992)

**Revendications**

**1.** Procédé d'élimination de signal(aux) parasite(s) dans une liaison à spectre étalé à séquence directe comprenant les étapes suivantes :

- détection fréquentielle de signaux parasites par comparaison du spectre du signal composite d'entrée à un seuil ;
- filtrage du signal composite d'entrée par un filtre à réponse impulsionnelle finie par convolution rapide ;

caractérisé en ce qu'il comprend, de plus :

- un asservissement adaptatif du seuil de détection autour d'un seuil de détection optimal ($\widehat{\text{SeuilOpt}}$) qui minimise le taux d'erreur de bit (TEB) de la liaison, et qui vérifie la relation |Seuil-Seuil Opt| ≤ A, A étant une valeur limite choisie pour que la dégradation de liaison reste acceptable, en utilisant une estimation de la densité spectrale d'entrée, après élimination par filtrage adaptatif des signaux parasites de puissance supérieure à une puissance donnée ;
- un maintien d'une puissance de sortie constante par compensation de l'influence du seuil de détection sur celle-ci.

**2.** Procédé selon la revendication 1, caractérisé en ce que l'on a simultanément :

- un minimum de pertes additionnelles moyennes en désétalement/démodulation ;
- un maintien d'une puissance de sortie constante par compensation de l'influence du seuil de détection sur celle-ci, la puissance étant, au voisinage de l'optimum, directement proportionnelle au seuil ;
- un spectre de puissance en sortie du dispositif, quasi uniformément réparti en fréquence sur la bande d'analyse, les signaux bande étroite perturbateurs étant ramenés en dessous du niveau moyen de sortie.

**3.** Procédé selon la revendication 1, caractérisé en ce que cet asservissement basé sur une estimation de la densité spectrale d'entrée est utilisé soit en boucle fermée, pour se positionner seul au voisinage de l'optimum, soit en boucle ouverte avec une consigne donnée.

**4.** Procédé selon la revendication 3, caractérisé en ce que, en boucle fermée, un asservissement discret sert à maintenir le seuil de détection dans une certaine plage autour d'un seuil optimum.

**5.** Procédé selon la revendication 1, caractérisé en ce qu'on a les étapes suivantes :

- estimation de la densité spectrale de puissance après application du filtrage telle que :

$$\hat{\hat{S}}^{i}_{tot} = \frac{1}{M} \sum_{k=0}^{M-1} GB^{i}(k).\left|S^{i}_{E}(k)\right|$$

$Gb^i(k)$ étant obtenu à partir du résultat de la comparaison du spectre d'entrée $|S^i_E(k)|$ à la précédente valeur

de seuil donc à partir de Gb(k) et de ses plus proches voisins ;

- moyennage sur P blocs consécutifs tel que :

$$\hat{\hat{S}}_{tot} = \frac{1}{p}\sum_{i=0}^{p-1}\hat{\hat{S}}^{i}_{tot}$$

- estimation du seuil optimum $\widehat{\text{SeuilOpt}}$.

**6.** Procédé selon la revendication 5, caractérisé en ce que, tant que le seuil est compris dans l'intervalle [$\widehat{\text{SeuilOpt}}$ - A, SeuilOpt + A], la consigne de détection Seuil ne change pas, sinon, Seuil = Seuil - B si Seuil est supérieur à SeuilOpt + A et Seuil = Seuil + B si Seuil est inférieur à SeuilOpt - A.

**7.** Procédé selon la revendication 5, caractérisé en ce que, l'asservissement basé sur une estimation de la densité spectrale d'entrée étant utilisé en boucle ouverte avec une consigne donnée, pour effectuer un filtrage du signal d'entrée par un filtre adaptatif réjecteur et pour un filtre passe-bande, on effectue une convolution de signaux.

**8.** Procédé selon la revendication 7, caractérisé en ce qu'on utilise une transformée de Fourier rapide directe et une transformée de Fourier rapide inverse.

**9.** Procédé selon la revendication 8, caractérisé en ce qu'on utilise la même transformée de Fourier rapide directe pour le filtrage et pour la détection.

**10.** Procédé selon la revendication 9, caractérisé en ce qu'il comprend les étapes suivantes :

- chevauchement d'un facteur 1/2 des blocs de taille M :

$$\forall m \in [0, M-1] \qquad s_E^{1}(m) = s_E\left(i.\frac{M}{2} + m\right)$$

- troncature et passage dans le domaine fréquentiel :

$$S_E^{i}(k) = \mathrm{TFD}\left[s_E^{i}(m).\, w_M(m)\right] = \frac{1}{M}\sum_{m=0}^{M-1} s_E\left(i.\frac{M}{2} + m\right).\, w_M(m).\, e^{-j2\pi\frac{k}{M}m}$$

- multiplication par le gabarit de filtrage adaptatif et passe-bande :

$$S_S^{i}(k) = S_E^{i}(k).\, GB^{i}(k)$$

- passage dans le domaine temporel :

$$s_S^i(m) = \text{TFDInverse}\left[S_S^i(k)\right] = \sum_{k=0}^{M-1}\left(S_E^i(k).\, GB^i(k)\right).\, e^{j2\pi\frac{k}{M}m}$$

$$= \sum_{k=0}^{M-1}\left(\frac{1}{M}\sum_{m=0}^{M-1} s_E\left(i.\,\frac{M}{2}+m\right).\, w_m(m).\, e^{-j2\pi\frac{k}{M}m}\right).\, GB^i(k).\, e^{j2\pi\frac{k}{M}m}$$

- rejet des deux extrémités de taille M/4 des blocs et reconstitution du signal de sortie :

$$\forall n \in \left[\frac{M}{4},\infty\right[ \quad i = \text{int}\left(\frac{2n}{M}+\frac{1}{2}\right) - 1 \quad s_S(n) = s_S^i\left(n - i\,\frac{M}{2}\right)$$

$$\left(n - i\,\frac{M}{2}\right) \in \left[\frac{M}{4}, \frac{3M}{4} - 1\right]$$

**11.** Procédé selon la revendication 3, caractérisé en ce qu'il est utilisé dans un système de satellites défilants.

**12.** Procédé selon la revendication 11, caractérisé en ce que la consigne de seuil appliquée sert à piloter un gain variable en sortie, la puissance totale en sortie étant, au voisinage de l'optimum, directement proportionnelle au seuil.

**13.** Dispositif d'élimination de signal parasite dans une liaison à spectre étalé à séquence directe, caractérisé en ce qu'il comprend :

- un premier module (10) de conversion série-parallèle pour des blocs de taille M, dans lequel on réalise un chevauchement des blocs de M/2, qui reçoit un signal d'entrée complexe ($s_E(n)$) ;
- un second module (11) de transformation de Fourier discrète à l'aide d'une transformée de Fourier rapide complexe directe, sur des blocs de taille M, pour passer ainsi dans le domaine fréquentiel, qui reçoit la sortie phase (Phs) et amplitude (Mag) du premier module (10) ;
- un troisième module (12) de transformation de Fourier inverse à l'aide d'une transformée de Fourier rapide inverse, sur des blocs de taille M, recevant les sorties amplitude et phase du précédent module (11) ;
- un quatrième module (13) de conversion parallèle/série, pour des blocs de taille M, avec rejet de M/2 échantillons des extrémités du bloc obtenu, qui délivre un signal de sortie complexe $s_s(n)$ ;
- un cinquième module (14) de génération d'une fenêtre de troncature temporelle, envoyé sur une entrée d'un premier multiplieur vectoriel (15) placé entre la sortie amplitude du premier module (10) et l'entrée amplitude du second module (11) ;
- un comparateur (16) du module de chaque échantillon spectral discret avec un seuil pour élaborer un gabarit d'emplacement de signaux parasites (Gb(k)), qui reçoit le signal amplitude en sortie du second module (11), ainsi qu'un signal de seuil ;
- un filtre à réponse impulsionnelle finie passe-bande (17) dont la sortie est envoyée sur un second multiplieur vectoriel (18), qui reçoit également la sortie du comparateur (16) et dont la sortie est envoyée sur un troisième multiplieur vectoriel (19) situé entre la sortie amplitude du second module (11) et l'entrée amplitude du troisième module (12) ;
- un estimateur (20) de la densité spectrale de puissance après application du filtrage tel que :

$$\hat{S}^i_{tot} = \frac{1}{M}\sum_{k=0}^{M-1} GB^i(k).\,\left|S_E^i(k)\right|$$

- un module (21) de moyennage sur P blocs consécutifs tel que :

$$\hat{\hat{S}}_{tot} = \frac{1}{p}\sum_{i=0}^{p-1}\hat{\hat{S}}^{i}_{tot}$$

- un estimateur (22) du seuil optimum $\hat{S}$euilOpt.

**14.** Dispositif selon la revendication 13, caractérisé en ce qu'un module de sélection de mode permet de fonctionner :

- soit en boucle fermée, mode 0, avec un autre module (23) de modification de la consigne Seuil tel que : si

$$|Seuil-\hat{S}euilOpt| > A$$

alors

$$\begin{cases} Seuil = Seuil - B & si\ (Seuil - \hat{S}euilOpt) > 0 \\ Seuil = Seuil + B & si\ (Seuil - \hat{S}euilOpt) < 0 \end{cases}$$

- soit en boucle ouverte, mode 1 ;

ce module de sélection de mode comprenant un premier et un second commutateurs (24 et 25), le premier commutateur délivrant le signal seuil au comparateur (16) et le second étant relié à un multiplieur scalaire disposé entre la sortie du troisième multiplieur vectoriel (19) et l'entrée amplitude du troisième module (12).

**Patentansprüche**

**1.** Verfahren zur Nebensignalunterdrückung bei einer Direktsequenzspreizspektrumverbindung, umfassend die folgenden Schritte:

- Frequenzdetektion von Nebensignalen durch Vergleich des Spektrums des Eingangsverbundsignals mit einer Schwelle;
- Filtern des Eingangsverbundsignals mittels eines Filters mit endlicher Impulsantwort durch schnelle Faltung;

**dadurch gekennzeichnet**, daß das Verfahren zusätzlich umfaßt:

- eine adaptive Kopplung der Detektionsschwelle mit der Umgebung einer optimalen Detektionsschwelle (SchwelleOpt), die die Bitfehlerrate (BFR) der Verbindung minimiert und die die Beziehung |Schwelle - SchwelleOpt | ≤ A überprüft, wobei A ein Grenzwert ist, der so gewählt wird, daß die Verschlechterung der Verbindung akzeptabel bleibt, wobei eine Schätzung der Eingangsspektraldichte verwendet wird, nachdem durch adaptives Filtern die Nebensignale unterdrückt wurden, deren Leistung größer als eine vorgegebene Leistung ist;
- ein Aufrechterhalten einer konstanten Ausgangsleistung durch Kompensierung des Einflusses der Detektionsschwelle auf die Ausgangsleistung.

**2.** Verfahren nach Anspruch 1, dadurch gekennzeichnet, daß gleichzeitig auftreten:

- ein Minimum zusätzlicher mittlerer Verluste bei Entspreizung/Demodulation;
- ein Aufrechterhalten einer konstanten Ausgangsleistung durch Kompensierung des Einflusses der Detektionsschwelle auf die Ausgangsleistung, wobei die Leistung in der Umgebung des Optimums direkt proportional

zur Schwelle ist;

- ein Leistungsspektrum am Ausgang der Vorrichtung, dessen Frequenz quasi homogen über das Abtastband verteilt ist, wobei die Schmalbandstörsignale unter das mittlere Ausgangsniveau gebracht wurden.

**3.** Verfahren nach Anspruch 1, dadurch gekennzeichnet, daß die Kopplung, basierend auf einer Schätzung der Eingangsspektraldichte, entweder in einem geschlossenen Umlauf verwendet wird, um sich allein in der Umgebung des Optimums zu positionieren, oder in einem offenen Umlauf verwendet wird mit einer bestimmten Vorgabe.

**4.** Verfahren nach Anspruch 3, dadurch gekennzeichnet, daß in geschlossenem Umlauf eine diskrete Kopplung dazu dient, die Detektionsschwelle innerhalb einer bestimmten Spanne um die optimale Schwelle herum aufrecht zu erhalten.

**5.** Verfahren nach Anspruch 1, gekennzeichnet durch die folgenden Schritte:

- Schätzung der spektralen Leistungsdichte nach Anwendung des Filterns, derart, daß:

$$\hat{\hat{S}}^{i}_{tot} = \frac{1}{M}\sum_{k=0}^{M-1} GB^{i}(k).\left|S^{i}_{E}(k)\right|$$

  $Gb^i(k)$ wird erhalten ausgehend von dem Ergebnis des Vergleichs des Eingangsspektrums $|S^i_E(k)|$ mit dem vorherigen Wert der Schwelle, also ausgehend von Gb (k) und dessen nächstgelegenen Nachbarwerten;

- Mittelung über P aufeinander folgende Blöcke, derart, daß

$$\hat{\hat{S}}_{tot} = \frac{1}{P}\sum_{i=0}^{P-1} \hat{\hat{S}}^{i}_{tot}$$

- Schätzung der optimalen Schwelle $\widehat{\text{SchwelleOpt}}$.

**6.** Verfahren nach Anspruch 5, dadurch gekennzeichnet, daß solange die Schwelle in dem Interval [$\widehat{\text{SchwelleOpt}}$ - A, SchwelleOpt + A] liegt, sich die Vorgabe für die Detektionsschwelle nicht ändert und ansonsten Schwelle = Schwelle - B wird, falls die Schwelle größer ist als SchwelleOpt + A und Schwelle = Schwelle + B wird, falls die Schwelle kleiner ist als SchwelleOpt - A.

**7.** Verfahren nach Anspruch 5, dadurch gekennzeichnet, daß die Kopplung, basierend auf einer Schätzung der Eingangsspektraldichte, in einem offenen Umlauf mit einer bestimmten Vorgabe verwendet wird zum Filtern des Eingangssignals mittels eines adaptiven Kammfilters und für einen Bandpaß-Filter eine Faltung der Signale durchgeführt wird.

**8.** Verfahren nach Anspruch 7, dadurch gekennzeichnet, daß eine direkte, schnelle Fourier-Transformation und eine inverse, schnelle Fourier-Transformation verwendet werden.

**9.** Verfahren nach Anspruch 8, dadurch gekennzeichnet, daß die selbe direkte, schnelle Fourier-Transformation für das Filtern und für die Detektion verwendet wird.

**10.** Verfahren nach Anspruch 9, dadurch gekennzeichnet, daß das Verfahren die folgenden Schritte umfaßt:

- Überlappung der Blöcke der Größe M um einen Faktor ½:

$$\forall m \in [0, M-1] \qquad s^{i}_{E}(m) = s_{E}\left(i.\frac{M}{2} + m\right)$$

- Verkürzung und Übergang in den Frequenzbereich:

$$S_E^i(k) = DFT\left[s_E^i(m).\, w_M(m)\right] = \frac{1}{M}\sum_{m=0}^{M-1} s_E\left(i.\frac{M}{2}+m\right).\, w_M(m).\, e^{-j2\pi\frac{k}{M}m}$$

- Multiplikation mit der Größe von adaptivem und Bandpaß-Filter:

$$S_S^i(k) = S_E^i(k).GB^i(k)$$

- Übergang in den Zeitbereich:

$$s_S^i(m) = InverseDFT\left[S_S^i(k)\right] = \sum_{k=0}^{M-1}\left(S_E^i(k).\, GB^i(k)\right).\, e^{j2\pi\frac{k}{M}m}$$

$$= \sum_{k=0}^{M-1}\left(\frac{1}{M}\sum_{m=0}^{M-1} s_E\left(i.\frac{M}{2}+m\right).\, w_m(m).\, e^{-j2\pi\frac{k}{M}m}\right).\, GB^i(k).\, e^{j2\pi\frac{k}{M}m}$$

- Abweisen der zwei Enden der Größe M/4 der Blöcke und Rekonstruktion des Ausgangssignals:

$$\forall n \in \left[\frac{M}{4}, \infty\right[ \quad i = int\left(\frac{2n}{M} + \frac{1}{2}\right) - 1 \quad s_S(n) = s_S^i\left(n - i\frac{M}{2}\right)$$

$$\left(n - i\frac{M}{2}\right) \in \left[\frac{M}{4}, \frac{3M}{4} - 1\right]$$

**11.** Verfahren nach Anspruch 3, dadurch gekennzeichnet, daß das Verfahren in einem Umlaufsatellitensystem verwendet wird.

**12.** Verfahren nach Anspruch 11, dadurch gekennzeichnet, daß die angewendete Vorgabe der Schwelle zum Steuern einer variablen Ausgangsverstärkung dient, wobei die Gesamtausgangsleistung in der Umgebung des Optimums direkt proportional zur Schwelle ist.

**13.** Vorrichtung zur Nebensignalunterdrückung bei einer Direktsequenzspreizspektrumverbindung, dadurch gekennzeichnet, daß die Vorrichtung umfaßt:

- ein erstes Modul (10) zur Reihen-Parallel Umwandlung für Blöcke der Größe M, in dem eine Überlappung der Blöcke um M/2 durchgeführt wird, wobei das erste Modul (10) ein komplexes Eingangssignal ($s_E(n)$) empfängt;
- ein zweites Modul (11) zur diskreten Fourier-Transformation unter Zuhilfenahme einer direkten, komplexen, schnellen Fourier-Transformation von Blöcken der Größe M, um auf diese Art in den Frequenzbereich überzugehen, wobei das zweite Modul (11) die Ausgänge Phase (Phs) und Amplitude (Mag) des ersten Moduls (10) empfängt;
- ein drittes Modul (12) zur inversen Fourier-Transformation unter Zuhilfenahme einer inversen, schnellen Fourier-Transformation von Blöcken der Größe M, empfangend die Ausgänge Amplitude und Phase des vorangehenden Moduls (11);
- ein viertes Modul (13) zur Umwandlung Parallel/Reihe für die Blöcke der Größe M mit Abweisen von M/2

Abtastwerten der Enden des erhaltenen Blocks, wobei das vierte Modul (13) ein komplexes Ausgangssignal $s_s(n)$ liefert;

- ein fünftes Modul (14) zur Erzeugung eines Zeitverkürzungsfensters, das zu einem Eingang eines ersten vektoriellen Multiplizierers (15) gesendet wird, plaziert zwischen dem Amplitudenausgang des ersten Moduls (10) und dem Amplitudeneingang des zweiten Moduls (11);
- einen Komparator (16) des Moduls jedes diskreten Spektralabtastwerts mit einer Schwelle zur Ausarbeitung einer Lagegröße von Nebensignalen (Gb (k)), wobei der Komparator (16) das Amplitudenausgangssignal des zweiten Moduls (11) sowie ein Schwellensignal empfängt;
- einen Bandpaß-Filter mit endlicher Impulsantwort (17), dessen Ausgang einem zweiten vektoriellen Multiplizierer (18) zugeführt wird, der ebenfalls den Ausgang des Komparators (16) empfängt und dessen Ausgang einem dritten vektoriellen Multiplizierer (19) zugeführt wird, der sich zwischen dem Amplitudenausgang des zweiten Moduls (11) und dem Amplitudeneingang des dritten Moduls (12) befindet;
- einen Kalkulator (20) der spektralen Leistungsdichte nach Durchführen des Filterns, derart, daß:

$$\hat{\hat{S}}^{i}_{tot} = \frac{1}{M}\sum_{k=0}^{M-1} GB^{i}(k).\left|S^{i}_{s}(k)\right|$$

- ein Modul (21) zur Mittelung über P aufeinander folgende Blöcke, derart, daß:

$$\hat{\hat{S}}_{tot} = \frac{1}{P}\sum_{i=0}^{P-1} \hat{\hat{S}}^{i}_{tot}$$

- einen Kalkulator (22) der optimalen $\hat{S}$chwelle SchwelleOpt.

**14.** Vorrichtung nach Anspruch 13, dadurch gekennzeichnet, daß ein Betriebsart-Auswahlmodul ein Funktionieren erlaubt:

- entweder in geschlossenem Umlauf, Betriebsart 0, mit einem anderen Modul (23) zur Modifizierung der Schwellenvorgabe, derart, daß
  falls

  $$|\text{Schwelle} - \hat{\text{S}}\text{chwelleOpt}| > A$$

  dann:

  $$\begin{cases} \text{Schwelle} = \text{Schwelle} - B, \text{ falls } (\text{Schwelle} - \hat{\text{S}}\text{chwelleOpt}) > 0 \\ \text{Schwelle} = \text{Schwelle} + B, \text{ falls } (\text{Schwelle} - \hat{\text{S}}\text{chwelleOpt}) < 0 \end{cases}$$

- oder in offenem Umlauf, Betriebsart 1;

dieses Betriebsart-Auswahlmodul umfassend einen ersten und einen zweiten Schalter (24 und 25), wobei der erste Schalter das Schwellensignal zum Komparator (16) liefert und der zweite mit einem skalaren Multiplizierer verbunden ist, der bereitgestellt wird zwischen dem Ausgang des dritten vektoriellen Multiplizierers (19) und dem Amplitudeneingang des dritten Moduls (12).

**Claims**

**1.** Method for eliminating interference signals in a direct sequence spread spectrum link having the following stages:

- frequency detection of interference signals by comparison of the composite input signal spectrum with a threshold,
- filtering the composite input signal by a finite impulse response filter by rapid convolution,

characterized in that it comprises:

- an adaptive slaving of the detection threshold about an optimum detection threshold (Seuil opt) which minimizes the bit error rate (BER) of the link and which proves the relation (Seuil-Seuil opt|≤ A, A being a limit value chosen so that the deterioration of the link remains acceptable, using an estimate of the input spectral density following the elimination by adaptive filtering of spurious power signals exceeding a given power,
- maintaining a constant output power by compensating the influence of the detection threshold thereon.

**2.** Method according to claim 1, characterized in that there are simultaneously:

- a minimum of additional losses in despreading/demodulation,
- a maintaining of a constant out power by compensating the influence of the detection threshold thereon, the power being, close to the optimum, directly proportional to the threshold,
- an output power spectrum of the device, which is quasi-uniformly frequency distributed on the analysis band, the disturbing narrow band signals being brought below the mean output level.

**3.** Method according to claim 1, characterized in that said slaving is based on an estimate of the input spectral density and is used either in closed loop for positioning only close to the optimum, or in open loop with a given instruction.

**4.** Method according to claim 3, characterized in that, in closed loop, a discreet slaving is used for maintaining the detection threshold in a certain range around an optimum threshold.

**5.** Method according to claim 1, characterized in that the following stages are involved:

- estimating the spectral power density following application of the filtering such that:

$$\hat{\bar{S}}^{i}_{tot} = \frac{1}{M} \sum_{k=0}^{M-1} GB^{i}(k).|S^{i}_{E}(k)|$$

  $GB^i(k)$ being obtained from the result of the comparison of the input spectrum $|S^i_E(k)|$ with the preceding threshold value, consequently from Gb(k) and its closest neighbours,
- averaging on P consecutive blocks such that:

$$\hat{\bar{S}}_{tot} = \frac{1}{p} \sum_{i=0}^{p-1} \hat{\bar{S}}^{i}_{tot}$$

- estimating the optimum threshold $\hat{S}$euilOpt.

**6.** Method according to claim 5, characterized in that, when the threshold is in the range [$\hat{S}$euilOpt - A, $\hat{S}$euilOpt + A], the detection instruction Seuil does not change, otherwise Seuil=Seuil ± B, depending on whether Seuil is above SeuilOpt + A or below SeuilOpt - A.

**7.** Method according to claim 5, characterized in that, the slaving based on an estimate of the input spectral density being used in open loop with a given instruction in order to carry out a filtering of the input signal by an adaptive notch filter and for a band-pass filter, there is a convolution of signals.

**8.** Method according to claim 7, characterized in that use is made of a direct, fast Fourier transformer and an inverse, fast Fourier transform.

**9.** Method according to claim 8, characterized in that the same direct, fast Fourier transform is used for the filtering and for the detection.

**10.** Method according to claim 9, characterized in that it comprises the following stages:

- overlap by a factor 1/2 of the blocks of size M:

$$\forall m \in [0, M-1] \quad s_E^i(m) = s_E\left(i.\frac{M}{2} + m\right)$$

- truncation and passage into the frequency domain:

$$S_E^i(k) = \text{TFD}\left[s_E^i(m).w_M(m)\right] = \frac{1}{M}\sum_{m=0}^{M-1} s_E\left(i.\frac{M}{w} + m\right).\, w_M(m).e^{-j2\pi\frac{k}{M}m}$$

- multiplication by the band pass and adaptive filtering jig:

$$S_s^i(k) = S_E^i(k).GB^i(k)$$

- passage into the time domain:

$$s_s^i(m) = \text{inverse DFT}\left[S_s^i(k)\right] = \sum_{k=0}^{M-1}\left(S_E^i(k).GB^i(k)\right).e^{-j2\pi\frac{k}{M}m}$$

$$= \sum_{k=0}^{M-1}\left(\frac{1}{M}\sum_{m=0}^{M-1} s_E\left(i.\frac{M}{2} + m\right).w_m(m).e^{-j2\pi\frac{k}{M}m}\right).GB^i(k).e^{j2\pi\frac{k}{M}m}$$

- rejection of the two ends of size M/4 of the blocks and reconstitution of the output signal:

$$\forall n \in \left[\frac{M}{4}, \infty\right[ \quad i = \text{int}\left(\frac{2n}{M} + \frac{1}{2}\right) - 1 \quad s_s(n) = s_s^i\left(n - i\frac{M}{2}\right)$$

$$\left(n - i\frac{M}{2}\right) \in \left[\frac{M}{4}, \frac{3M}{4} - 1\right]$$

**11.** Method according to claim 3, characterized in that it is used in a non-stationary satellite system.

**12.** Method according to claim 11, characterized in that the threshold instruction applied is used for controlling a variable gain at the output, the total output power being, close to the optimum, directly proportional to the threshold.

**13.** Device for eliminating interference signals in a direct sequence spread spectrum link, characterized in that it comprises:

- a first serial-parallel conversion module (10) for blocks of size M, in which there is an overlapping of the blocks by M/2, which receives a complex input signal ($s_E(n)$),
- a second discreet Fourier transformation module (11) using a direct, complex, fast Fourier transform, on blocks of size M, to thus pass into the frequency domain, which receives the phase output (Phs) and amplitude output (Mag) from the first module (10),
- a third inverse Fourier transformation module (12) using an inverse fast Fourier transform, on blocks of size M, receiving the amplitude and phase outputs from the preceding module (11),
- a fourth parallel-serial conversion module (13) for blocks of size M, with rejection of M/2 samples of the ends of the block obtained, which supplies a complex output signal $s_s(n)$,
- a fifth module (14) for generating a time truncation window supplied to an input of a first vector multiplier (15), positioned between the amplitude output of the first module (10) and the amplitude input of the second module (11),
- a comparator (16) of the module of each discreet spectral sample with a threshold for producing a jig for the location of the interference signals (Gb(k)), which receives the amplitude signal at the output of the second module, as well as a threshold signal,
- a band pass, finite impulse response filter (17), whose output is supplied to a second vector multiplier (18), which also receives the output of the comparator (16) and whose output is supplied to a third vector multiplier (19) between the amplitude output of the second module (11) and the amplitude input of the third module (12),
- an estimator (20) of the spectral power density after the application of the filtering such that:

$$\hat{\bar{S}}^{i}_{tot} = \frac{1}{M} \sum_{k=0}^{M-1} GB^{i}(k).|S_E(k)|$$

- a module (21) for averaging on P consecutive blocks such that:

$$\hat{\bar{S}}_{tot} = \frac{1}{p} \sum_{i=0}^{p-1} \hat{\bar{S}}^{i}_{tot}$$

- an estimator (22) of the optimum threshold $\widehat{\text{SeuilOpt}}$.

**14.** Device according to claim 13, characterized in that a mode selection module makes it possible to operate:

- either in closed loop, mode 0, with another module (23) for modifying the instruction Seuil such that: if

$$|\text{Seuil}-\widehat{\text{SeuilOpt}}| > A$$

then:

$$\begin{cases} \text{Seuil} = \text{Seuil} - B \text{ if } (\text{Seuil} - \widehat{\text{SeuilOpt}}) > 0 \\ \text{Seuil} = \text{Seuil} + B \text{ if } (\text{Seuil} - \widehat{\text{SeuilOpt}}) < 0 \end{cases}$$

- or in open loop, mode 1;

said mode selection module comprising a first and a second switches (24, 25), the first switch delivering the threshold signal to the comparator (16) and the second being connected to a scalar multiplier located between the output of the third vector multiplier (19) and the amplitude input of the third module (12).

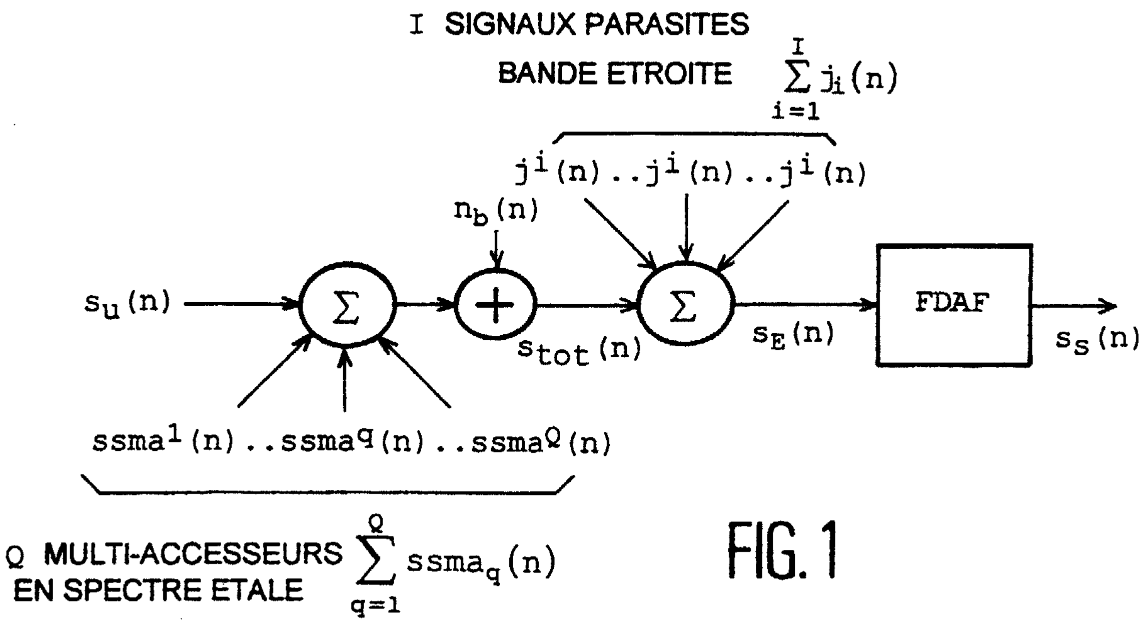
I SIGNAUX PARASITES
BANDE ETROITE
$\sum_{i=1}^{I} j_i(n)$
$j^1(n)..j^i(n)..j^I(n)$
$n_b(n)$
$s_u(n)$
$s_{tot}(n)$
$s_E(n)$
FDAF
$s_S(n)$
$ssma^1(n)..ssma^q(n)..ssma^Q(n)$
Q MULTI-ACCESSEURS
EN SPECTRE ETALE
$\sum_{q=1}^{Q} ssma_q(n)$

FIG. 1

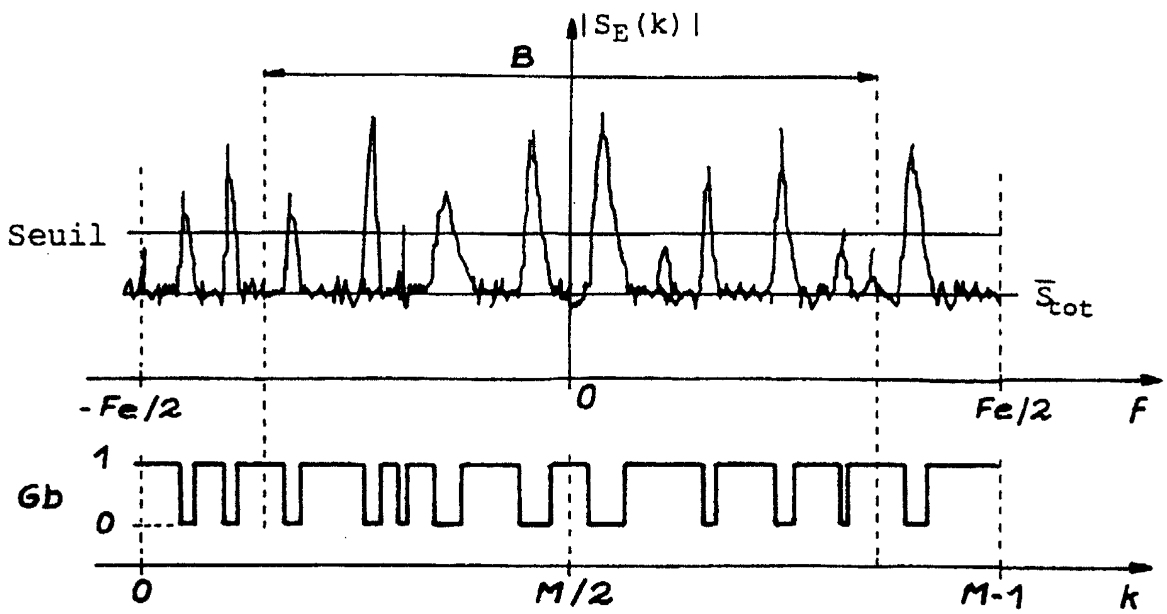
$|S_E(k)|$
B
Seuil
$\bar{S}_{tot}$
-Fe/2
0
Fe/2
F
Gb
1
0
0
M/2
M-1
k

FIG. 2

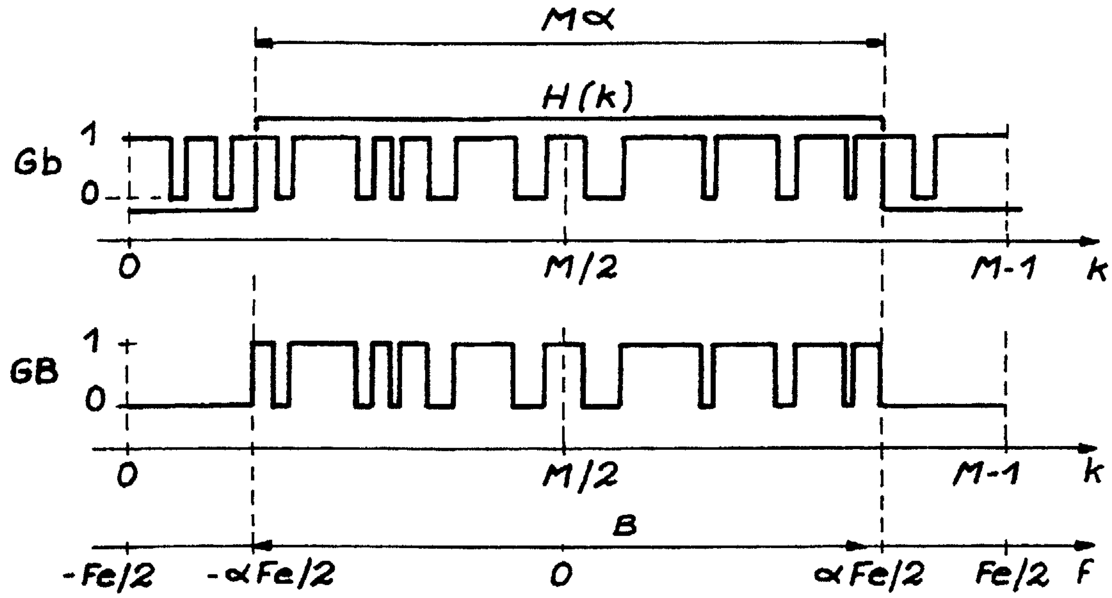
Mα
H(k)
Gb
1
0
0
M/2
M-1
k
GB
1
0
0
M/2
M-1
k
B
-Fe/2
-αFe/2
0
αFe/2
Fe/2
f

FIG. 3

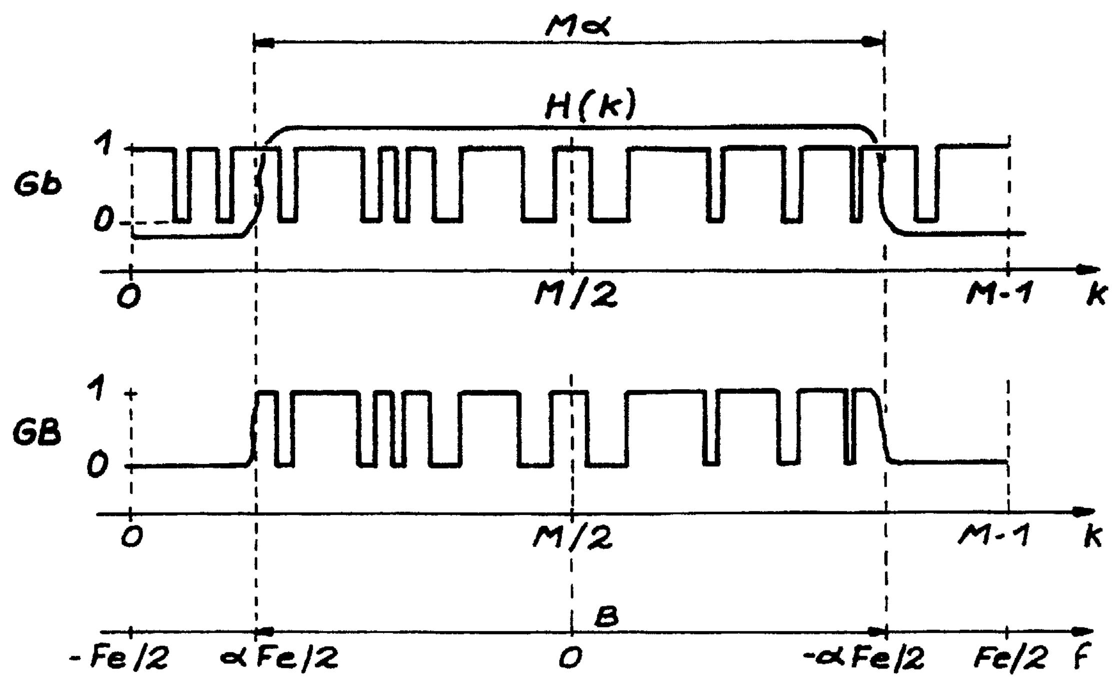
Mα
H(k)
Gb
1
0
0
M/2
M-1
k
GB
1
0
0
M/2
M-1
k
B
-Fe/2
αFe/2
0
-αFe/2
Fe/2
f

FIG. 4

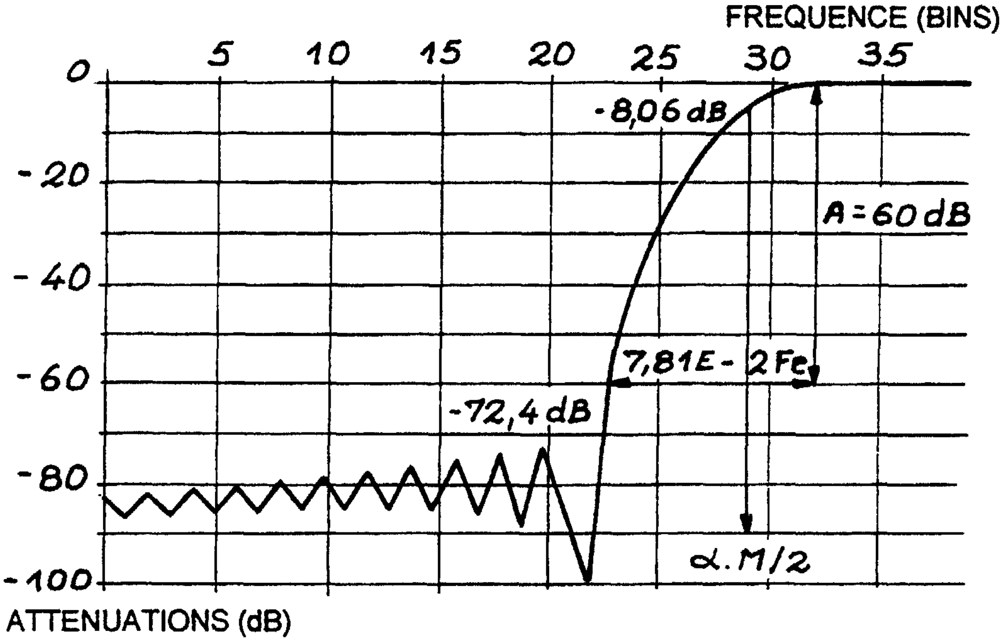
FREQUENCE (BINS)
0
5
10
15
20
25
30
35
-20
-40
-60
-80
-100
-8,06 dB
A=60 dB
7,81E-2 Fe
-72,4 dB
α.M/2
ATTENUATIONS (dB)

FIG. 5

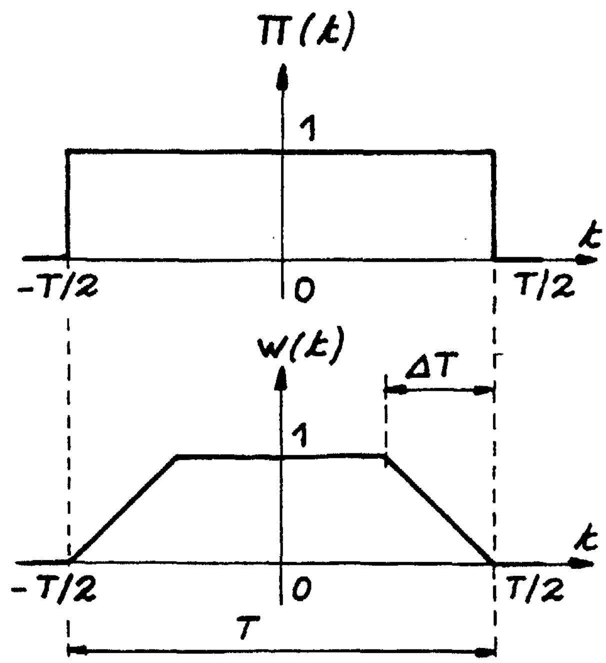
Π(t)
1
t
-T/2
0
T/2
w(t)
ΔT
1
t
-T/2
0
T/2
T

FIG. 6

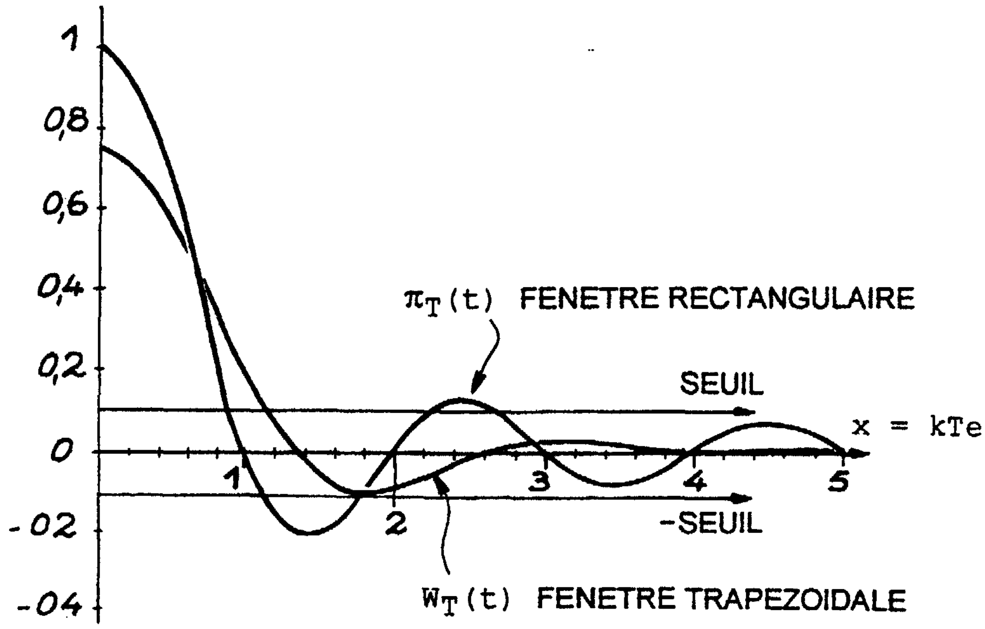
1
0,8
0,6
0,4
0,2
0
-0,2
-0,4
1
2
3
4
5
$\pi_T(t)$ FENETRE RECTANGULAIRE
SEUIL
x = kTe
-SEUIL
$W_T(t)$ FENETRE TRAPEZOIDALE

FIG. 7

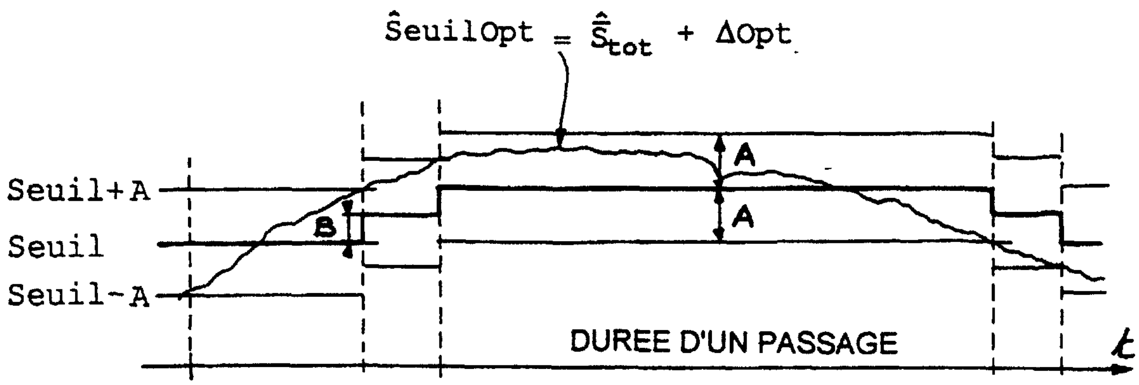
$\hat{S}euilOpt = \hat{\hat{S}}_{tot} + \Delta Opt$
Seuil+A
Seuil
Seuil-A
A
A
B
DUREE D'UN PASSAGE
t

FIG. 8

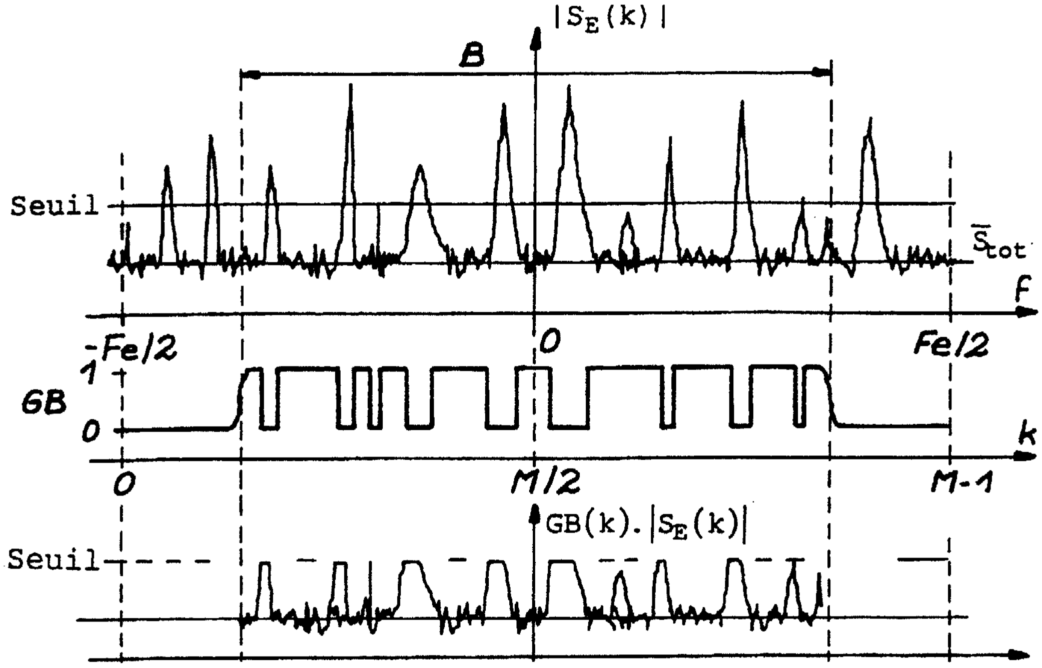
|S_E(k)|
B
Seuil
S̄tot
f
-Fe/2
0
Fe/2
GB
1
0
k
0
M/2
M-1
GB(k).|S_E(k)|
Seuil

FIG. 9

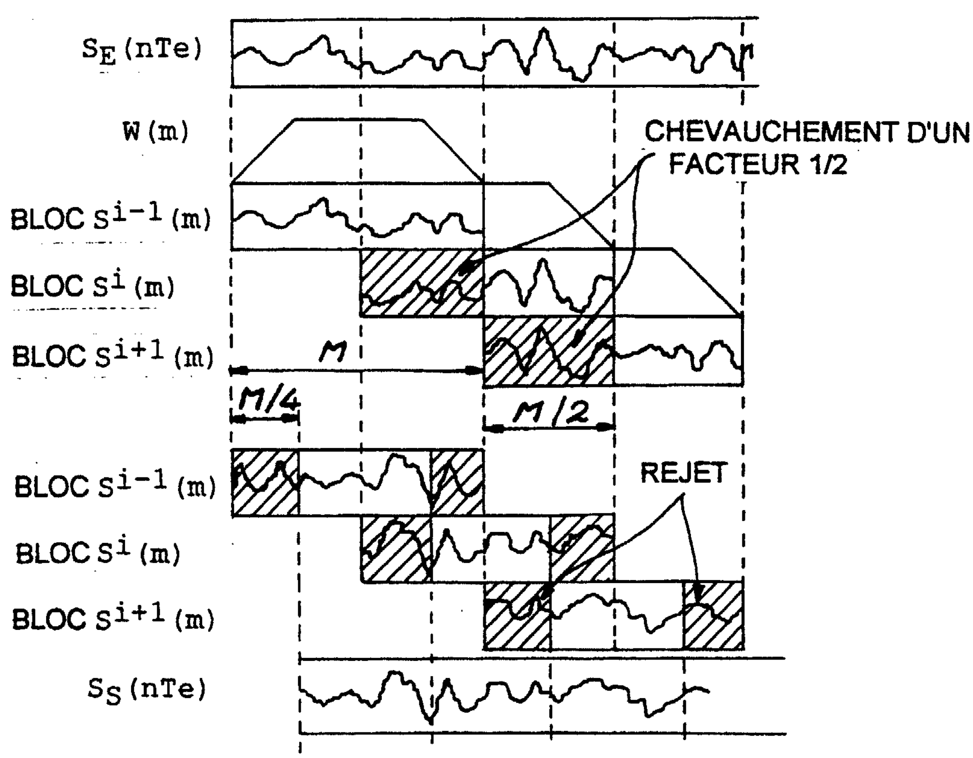
S_E(nTe)
W(m)
CHEVAUCHEMENT D'UN FACTEUR 1/2
BLOC S^{i-1}(m)
BLOC S^i(m)
BLOC S^{i+1}(m)
M
M/4
M/2
BLOC S^{i-1}(m)
REJET
BLOC S^i(m)
BLOC S^{i+1}(m)
S_S(nTe)

FIG. 10

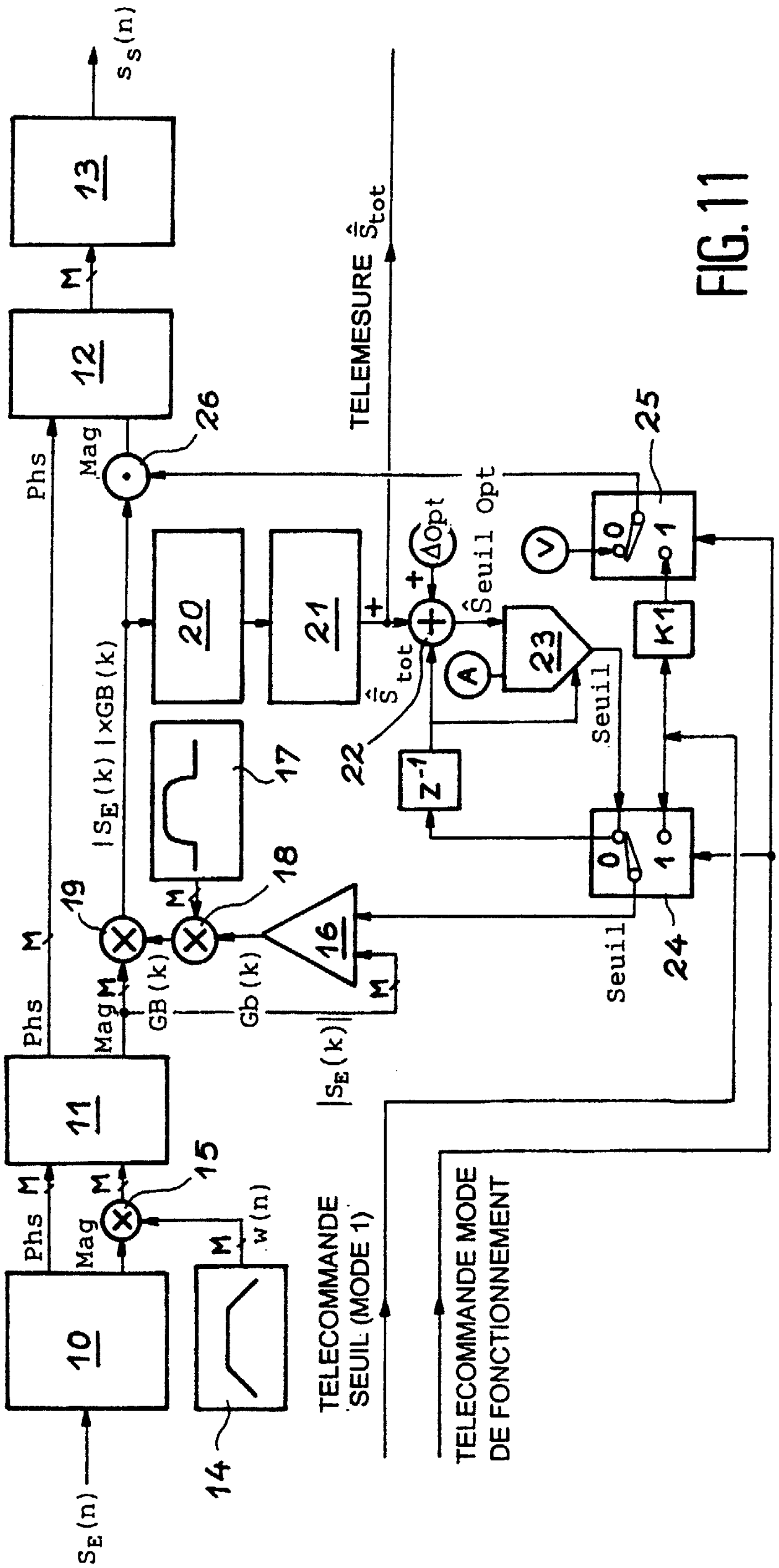
$s_E(n)$
10
11
12
13
$s_S(n)$
Phs
Mag
M
14
w(n)
15
GB(k)
Gb(k)
$|S_E(k)|$
16
17
18
19
$|S_E(k)|\times GB(k)$
20
21
22
$\hat{S}_{tot}$
+
$\Delta Opt$
$\hat{S}euil$ Opt
23
A
Seuil
$z^{-1}$
24
0
1
25
V
K1
26
TELEMESURE $\hat{S}_{tot}$
TELECOMMANDE SEUIL (MODE 1)
TELECOMMANDE MODE DE FONCTIONNEMENT

FIG. 11